# EUROPÄISCHE PATENTANMELDUNG

(11) **EP 0 538 188 A1**
(43) Veröffentlichungstag der Anmeldung: **21.04.1993**
(21) Anmeldenummer: 92810756.4
(22) Anmeldetag: 06.10.1992
(51) Int. Cl.: G02B 1/04, C08G 61/06

(54) **Copolymere enthaltend Propellane und Kontaktlinsen daraus**

(30) Priorität: 14.10.1991 CH 3003/91
(71) Anmelder: CIBA-GEIGY AG, CH-4002 Basel (CH); Max-Planck-Gesellschaft zur Förderung der Wissenschaften e.V., D-37073 Göttingen (DE)
(72) Erfinder: Herbrechtsmeier, Peter, Dr., W-6240 Königstein (DE); Schäfer, Horst, Dr., W-8750 Aschaffenburg 19 (DE); Seiferling, Bernhard, Dr., W-8752 Goldbach (DE); Schlüter, Arnulf-Dieter, Prof. Dr., W-1000 Berlin 45 (DE); Bothe, Harald, Dr., W-6200 Wiesbaden (DE); Freudenberger, Rainer, W-6052 Mühlheim (DE)

(57) **Zusammenfassung**

Die Erfindung betrifft Kontaktlinsen aus einem Copolymer enthaltend Einheiten der Formel I, 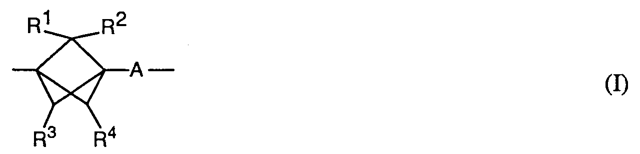
worin R¹ und R² unabhängig voneinander für Wasserstoff, Alkyl, Alkoxyalkyl, Organosilylalkyl oder Organosilyl stehen, R³ und R⁴ jeweils für Wasserstoff stehen oder gemeinsam einen zweiwertigen Alkylenrest mit bis zu 8 Kohlenstoffatomen bedeuten,
und A für einen bivalenten substitutierten 1,2-Ethylenrest steht, der sich von einem copolymerisierbaren Vinylmonomer dadurch ableitet, dass die Vinyl-Doppelbindung durch eine Einfachbindung ersetzt ist. Ferner betrifft sie die zugrundeliegenden Copolymere, deren Verwendung zur Herstellung von Kontaktlinsen und Verfahren zur Herstellung von Kontaktlinsen aus derartigen Copolymeren.

## Beschreibung

Die vorliegende Erfindung betrifft Copolymere auf der Basis von Propellanen, Verfahren zu deren Herstellung, Kontaktlinsen bestehend zum Teil oder im wesentlichen aus derartigen Copolymeren, Verfahren zur Herstellung von diesen Kontaktlinsen und die Verwendung der genannten Copolymere zur Herstellung von Kontaktlinsen oder anderen Gegenständen.

Die erfindungsgemässen Kontaktlinsen, wie auch die zugrundeliegenden Copolymere, zeichnen sich je nach Wahl der Comonomeren durch hohe Härte oder Wasseraufnahme aus. In jedem Fall besitzen sie eine hohe Sauerstoffdurchlässigkeit.

Diese Vorteile werden dadurch erreicht, dass zur Herstellung der Copolymere Monomere verwendet werden, die ein tricyclisches Ringsystem enthalten. Bei diesem Ringsystem handelt es sich um [1.1.1]Propellane. Zusätzlich zu den Propellanen werden ein oder mehrere copolymerisierbare Vinylmonomere verwendet, wie z.B. Siloxanmonovinylkomponenten, Siloxanoligovinylkomponenten, hydrophobe Vinylkomponenten, wie fluorhaltige Vinylverbindungen oder Vinylverbindungen mit sperrigem Kohlenwasserstoffrest, oder hydrophile Vinylkomponenten.

Die copolymerisierbaren Vinylmonomere sind vorzugsweise Acrylate oder Methacrylate. Welche von ihnen mit den Propellanen copolymerisiert werden, hängt weitgehend von den gewünschten Eigenschaften der resultierenden Copolymere und Kontaktlinsen ab. So tragen Vinylmonomere mit sperrigen Kohlenwasserstoffresten zu hoher Härte und in quellbaren Systemen zu hoher Steifigkeit bei. Aufgrund von sperrigen Gruppen sind derartige Produkte weitgehend amorph. Das ist besonders günstig für hohe Transparenz und Sauerstoffpermeabilität. Eine weitere Erhöhung der Permeabilität kann durch Verwendung von Siloxan-haltigen Vinylkomponenten oder fluorhaltigen Vinylkomponenten erreicht werden. Demgegenüber bewirken hydrophile Vinylkomponenten als Comonomere, dass gut benetzende Copolymere oder Kontaktlinsen erhalten werden. Bei höherer Konzentration von hydrophilen Comonomeren kann konzentrationsabhängig Wasserlöslichkeit der Produkte auftreten. Durch Vernetzung werden hingegen in einem solchen Fall quellbare Copolymere oder Kontaktlinsen erhalten.

Propellane lassen sich mit Vinylmonomeren copolymerisieren und bilden dabei insbesondere 1:1-Addukte, in denen die Einheiten, die aus Propellan gebildet werden, und die Einheiten, die aus Vinylmonomer gebildet werden, alternieren. Einige derartige Copolymere sind bereits bekannt. So wurde z.B. ein Copolymer mit Acrylnitril beschrieben, K. Opitz und A.-D. Schlüter, Angew. Chemie 101, 513 (1989), ferner eines mit Maleinsäureanhydrid, J.-M. Gosau und A.-D. Schlüter, Chem. Ber. 123 (1990) 2449. Für die genannten Copolymere sind bisher keine technischen Anwendungen bekanntgeworden.

Ein wesentlicher Aspekt der vorliegenden Erfindung ist darauf gerichtet, dass die z.T. bereits bekannten Copolymere sich für die Herstellung von Kontaktlinsen verwenden lassen. Die Erfindung betrifft daher in einer ersten Ausführungsform eine Kontaktlinse aus einem Copolymer enthaltend Einheiten der Formel I, 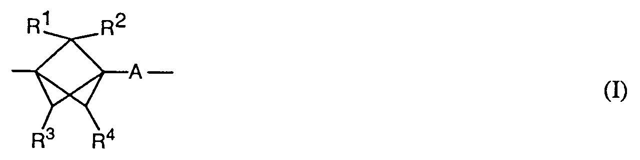
worin R¹ und R² unabhängig voneinander für Wasserstoff, Alkyl, Alkoxyalkyl, Organosilylalkyl oder Organosilyl stehen, R³ und R⁴ jeweils für Wasserstoff stehen oder gemeinsam einen zweiwertigen Alkylenrest mit bis zu 8 Kohlenstoffatomen bedeuten,
und A für einen bivalenten substitutierten 1,2-Ethylenrest steht, der sich von einem copolymerisierbaren Vinylmonomer dadurch ableitet, dass die Vinyl-Doppelbindung durch eine Einfachbindung ersetzt ist.

Im Rahmen dieser Erfindung haben die verwendeten allgemeinen Begriffe insbesondere die folgende Bedeutung:
Reste und Gruppen, die mit "Nieder" bezeichnet sind, wie Niederalkyl, Niederalkoxy etc., bedeuten Reste und Gruppen mit bis zu 7 Kohlenstoffatomen, bevorzugt mit bis zu 4 Kohlenstoffatomen.

Alkyl steht insbesondere für Alkyl mit bis zu 15 Kohlenstoffatomen, bevorzugt für Niederalkyl, und bedeutet z.B. Methyl, Ethyl, Propyl, Butyl, tert.-Butyl, Pentyl, Octyl oder Decyl.

Alkoxy steht insbesondere für Niederalkoxy und bedeutet z.B. Methoxy, Ethoxy, Propoxy, Butoxy oder tert.-Butoxy. Alkoxyalkyl bedeutet insbesondere Niederalkoxyniederalkyl mit insgesamt bis zu 14, bevorzugt mit bis zu 10 Kohlenstoffatomen. Beispiele hierfür sind Methoxyethyl, Ethoxyethyl, Ethoxybutyl und Propoxybutyl.

Organosilylalkyl steht insbesondere für ein- bis mehrfach durch Triniederalkylsilyl, z.B. Trimethylsilyl, oder durch Phenyldiniederalkylsilyl, z.B. Phenyldimethylsilyl, substituiertes Niederalkyl. Beispiele hierfür sind Trimethylsilylmethyl, Trimethylsilylethyl, Trimethylsilylbutyl, Triethylsilylethyl, Tert.-butyldimethylsilylethyl, Tert-butyldimethylsilylmethyl oder Phenyldimethylsilylmethyl.

Organosilyl steht insbesondere für ein- bis mehrfach durch Triniederalkyl, z.B. Trimethyl, oder Phenyldiniederalkyl, z.B. Phenyldimethyl, substituiertes Silicium. Beispiele hierfür sind Trimethylsilyl, Triethylsilyl, Tert-butyldimethylsilyl oder Phenyldimethylsilyl.

Ein durch R³ und R⁴ gemeinsam gebildeter zweiwertiger Alkylenrest mit bis zu 8 Kohlenstoffatomen ist vorzugsweise ein Niederalkylenrest, der die beiden Atome, an die R³ und R⁴ gebunden sind, durch 2 bis 5 Kohlenstoffatome voneinander trennt, insbesondere durch 3 oder 4 Kohlenstoffatome. Beispiele hierfür sind 1,3-Propylen, 1,3-Butylen, 1,4-Butylen, 3-Methyl-1,5-Pentylen, oder 1,5-Pentylen.

Die Monomere, von denen man ausgeht, um den bicyclischen Bestandteil der Formel I für die erfindungsgemässen Copolymere oder Kontaktlinsen bereitzustellen, sind Verbindungen der Formel II, 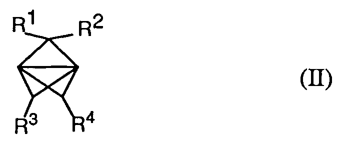
worin R¹, R², R³ und R⁴ die für Formel I angegebene Bedeutung aufweisen. Diese Verbindungen, sogenannte [1.1.1]Propellane, sind an sich bekannt und können auf an sich bekannte Weise hergestellt werden.

Bevorzugte Verbindungen der Formel II, die erfindungsgemäss zur Anwendung kommen, sind solche, in denen R¹ und R² unabhängig voneinander für Wasserstoff, Niederalkyl oder Niederalkoxyniederalkyl stehen und R³ und R⁴ jeweils für Wasserstoff stehen oder gemeinsam einen zweiwertigen Niederalkylenrest bedeuten.

Besonders bevorzugte Verbindungen der Formel II; die erfindunsgemäss zur Anwendung kommen, sind solche, in denen R¹ und R² unabhängig voneinander für Wasserstoff oder Niederalkyl stehen und R³ und R⁴ jeweils für Wasserstoff stehen oder gemeinsam einen zweiwertigen Niederalkylenrest bedeuten, der die beiden Atome, an die R³ und R⁴ gebunden sind, durch 2 bis 5 Kohlenstoffatome voneinander trennt, insbesondere durch 3 oder 4 Kohlenstoffatome.

Ganz besonders bevorzugte Verbindungen der Formel II, die erfindunsgemäss zur Anwendung kommen, sind solche, in denen R¹ für Wasserstoff steht, R² für Wasserstoff oder Niederalkyl steht und R³ und R⁴ jeweils für Wasserstoff stehen oder gemeinsam einen zweiwertigen Niederalkylenrest bedeuten, der die beiden Atome, an die R³ und R⁴ gebunden sind, durch 3 oder 4 Kohlenstoffatome voneinander trennt.

Die vorstehend genannten Bevorzugungen für Verbindungen der Formel II gelten analog auch für Copolymere der Formel I und die erfindungsgemässen Kontaktlinsen, die Copolymere der Formel I enthalten.

Unter einem copolymerisierbaren Vinylmonomer wird im Rahmen dieser Erfindung insbesondere ein Monomer verstanden, das eine Vinylgruppe enthält und bereits im Zusammenhang mit Copolymerisaten, die für Kontaktlinsen Verwendung gefunden haben, erwähnt wurde. Unter einer Vinylgruppe wird in diesem Zusammenhang nicht ausschliesslich die Vinylgruppierung "-CH=CH₂" verstanden, sondern allgemein jede Gruppierung, die eine Kohlenstoff-Kohlenstoff-Doppelbindung aufweist. Speziell bevorzugte Bedeutungen des Wortbestandteils "Vinyl" bei Vinylmonomeren werden aus den nachstehenden Erläuterungen im Zusammenhang mit Verbindungen der Formel III deutlich. Copolymerisierbare Vinylmonomere im Sinne dieser Erfindung sind beispielsweise in den EP-A-374,752, EP-A-417,235 und in der EP-A-455,587 bereits offenbart worden.

Insbesondere sind die Monomere, von denen man ausgeht, um den Bestandteil A der Formel I für die erfindungsgemässen Copolymere oder Kontaktlinsen bereitzustellen, Verbindungen der Formel III, 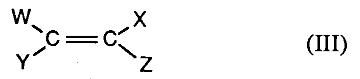
die, symbolisiert durch den Buchstaben A, in das Copolymere der Formel I in Gestalt der Teilformel IV eingebaut werden, 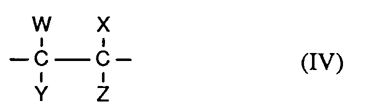
wobei die Substituenten W, X, Y und Z die folgenden Bedeutungen aufweisen: drei dieser Substituenten bedeuten Wasserstoff und der vierte Substituent ist ausgewählt unter Acyl, Halogen, einem heterocyclischen Rest oder Aryl, oder zwei dieser Substituenten bedeuten Wasserstoff, der dritte bedeutet Niederalkyl, und der vierte Substituent ist ausgewählt unter Acyl, Halogen, einem heterocyclischen Rest oder Aryl, oder zwei dieser Substituenten bedeuten Wasserstoff und die beiden anderen Substituenten bilden gemeinsam eine Kohlenwasserstoffbrücke, die ununterbrochen oder durch ein oder zwei Heteroatome unterbrochen ist, oder die beiden anderen Substituenten bedeuten unabhängig voneinander Acyl. Die Monomere der Formel III sind entweder hydrophile Vinylmonomere oder hydrophobe Vinylmonomere.

Aryl bedeutet insbesondere einen aromatischen Kohlenwasserstoffrest mit 6 bis 15 Kohlenstoffatomen, wie Phenyl oder Phenyl, das durch einen oder mehrere, insbesondere bis zu drei, Reste der Art Niederalkyl, Niederalkoxy, Halogen, Amino oder Hydroxy substituiert ist. Beispiele sind Phenyl oder Tolyl.

Halogen bedeutet insbesondere Chlor, Brom oder Fluor, kann jedoch auch für Iod stehen.

Ein heterocyclischer Rest ist insbesondere ein 5- oder 6-gliedriger aromatischer oder gesättigter Ring mit ein oder zwei Heteroatomen, wie Sauerstoff- oder Stickstoffatomen, insbesondere mit ein oder zwei Stickstoffatomen. Hiervon sind auch Lactame erfasst.

Eine Kohlenwasserstoffbrücke, die ununterbrochen oder durch ein oder zwei Heteroatome unterbrochen ist, bedeutet insbesondere Niederalkylen oder durch Sauerstoff oder Stickstoff unterbrochenes Niederalkylen. Durch Stickstoff unterbrochenes Niederalkylen kann auch substituiert sein, z.B. durch Niederalkyl. Beispiele sind 1,3-Propylen, 2-Aza-1,3-Propylen oder N-Methyl-2-Aza-1,3-Propylen.

Acyl steht für Carboxy, Aroyl, Cycloalkanoyl oder Alkanoyl und insbesondere für Carboxy, unsubstituiertes oder substituiertes Aryloxycarbonyl, unsubstituiertes oder substituiertes Cycloalkyloxycarbonyl oder unsubstituiertes oder substituiertes Alkoxycarbonyl.

Aroyl bedeutet beispielsweise Benzoyl oder durch einen oder mehrere, insbesondere bis zu drei, Reste der Art Niederalkyl, Niederalkoxy, Halogen oder Hydroxy substituiertes Benzoyl, kann aber auch Phenylsulfonyl oder Phenyloxysulfonyl sowie durch Niederalkyl, Niederalkoxy, Halogen oder Hydroxy substituiertes Phenylsulfonyl oder Phenyloxysulfonyl bedeuten.

Alkanoyl bedeutet vorzugsweise Niederalkanoyl und ist z.B. Acetyl, Propanoyl oder Butanoyl.

Cycloalkanoyl bedeutet vorzugweise Cycloalkyloxycarbonyl mit bis zu 8 Kohlenstoffatomen und bedeutet z.B. Cyclohexyloxycarbonyl.

Unsubstituiertes Alkoxycarbonyl ist vorzugsweise Niederalkoxycarbonyl und bedeutet z.B. Methoxycarbonyl, Ethoxycarbonyl, Propyloxycarbonyl, Butoxycarbonyl, tert.-Butoxycarbonyl, tert-Butylmethyloxycarbonyl oder 2-Ethylhexyloxycarbonyl.

Unsubstituiertes Aryloxycarbonyl ist vorzugsweise Phenyloxycarbonyl.

Substituiertes Aryloxycarbonyl ist vorzugsweise durch einen oder mehrere, insbesondere bis zu drei, Reste der Art Niederalkyl, Niederalkoxy, Halogen oder Hydroxy substituiertes Phenyloxycarbonyl.

Substituiertes Alkoxycarbonyl ist vorzugsweise durch hydrophobe Gruppen, wie Halogen, z.B. Fluor, Siloxangruppen oder hydrophile Gruppen, wie Hydroxy, Amino, Mono- oder Diniederalkylamino substituiert. Weitere Bedeutungen von substituiertem Alkoxycarbonyl, wie auch von substituiertem Aryloxycarbonyl und substituiertem Cycloalkyloxycarbonyl, werden implizit durch die nachfolgende Beschreibung von speziell geeigneten Vinylmonomeren der Formel III gegeben.

Die erfindungsgemäss verwendbaren hydrophilen Vinylmonomere sind vorzugsweise Acrylate und Methacrylate der Formel III, worin W und Y für Wasserstoff stehen, X für Wasserstoff oder Methyl steht und Z eine Gruppe -Z¹-Z² bedeutet, worin Z¹ für -COO- steht, das über Sauerstoff an Z² gebunden ist, und Z² einen durch eine wasserlöslich machende Gruppe wie Carboxy, Hydroxy oder tert.-Amino, z.B. tert. Niederalkylamino mit 1 bis 7 Kohlenstoffatomen je Niederalkylgruppe, eine Polyethylenoxidgruppe mit 2-100 sich wiederholenden Einheiten, bevorzugt mit 2-40 sich wiederholenden Einheiten, oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, wie z.B. einen entsprechend substituierten Alkyl-, Cycloalkyl- oder Phenylrest oder eine Kombination solcher Reste, wie Phenylalkyl oder Alkylcycloalkyl;
ferner Acrylamide und Methacrylamide der Formel III, worin W und Y für Wasserstoff stehen, X für Wasserstoff oder Methyl steht und Z Aminocarbonyl oder Diniederalkylaminocarbonyl bedeutet;
Acrylamide und Methacrylamide der Formel III, worin W und Y für Wasserstoff stehen, X für Wasserstoff oder Methyl steht und Z monosubstituiertes Aminocarbonyl bedeutet, das durch eine wie vorstehend definierte Gruppe Z² oder Niederalkyl substituiert ist;
Maleinate und Fumarate der Formel III, worin W und X (oder W und Z) für Wasserstoff stehen, und Y und Z (oder X und Y) unabhängig voneinander eine Gruppe -Z¹-Z² bedeuten, worin Z¹ und Z² wie vorstehend definiert sind;
Crotonate der Formel III, worin W und X für Wasserstoff stehen, Y für Methyl steht und Z eine Gruppe -Z¹-Z² bedeutet, worin Z¹ und Z² wie vorstehend definiert sind;
Vinylether der Formel III, worin W, X und Y für Wasserstoff stehen und Z eine Gruppe -Z¹-Z² bedeutet, worin Z¹ für Sauerstoff steht und Z² wie vorstehend definiert ist;
Vinyl-substituierte fünf- oder sechsgliedrige Heterocyclen mit ein oder zwei Stickstoffatomen sowie N-Vinyllactame, wie N-Vinyl-2-pyrrolidon, der Formel III, worin W, X und Y für Wasserstoff stehen und Z einen fünf- oder sechsgliedrigen heterocyclischen Rest mit ein oder zwei Stickstoffatomen bedeutet, sowie den über Stickstoff gebundenen Rest eines Lactams, z.B. denjenigen von 2-pyrrolidon;
und vinylisch ungesättigte Carbonsäuren der Formel III mit insgesamt 3 bis 10 Kohlenstoffatomen, wie Methacrylsäure, Crotonsäure, Fumarsäure oder Zimtsäure.

Bevorzugt sind z.B. durch Hydroxy substituierte C₂-C₄-Alkyl(meth)acrylate, fünf- bis siebengliedrige N-Vinyllactame, N,N-Di-C₁-C₄-alkyl(meth)acrylamide und vinylisch ungesättigte Carbonsäuren mit insgesamt 3 bis 5 Kohlenstoffatomen.

Zu den verwendbaren wasserlöslichen Monomeren gehören: 2-Hydroxyethyl-, 2- und 3-Hydroxypropyl-, 2,3-Dihydroxypropyl-, Polyethoxyethyl- und Polyethoxypropylacrylate und -methacrylate sowie die entsprechenden Acrylamide und Methacrylamide, Acrylamid und Methacrylamid, N-Methylacrylamid und -methacrylamid, Bisaceton-acrylamid, 2-Hydroxyethylacrylamid, Dimethylacrylamid und -methacrylamid sowie Methylolacrylamid und -methacrylamid, N,N-Dimethyl- und N,N-Diethylaminoethylacrylat und -methacrylat sowie die entsprechenden Acrylamide und Methacrylamide, N-tert.-Butylaminoethylmethacrylat und -methacrylamid, 2- und 4-Vinylpyridin, 4- und 2-Methyl-5-vinylpyridin, N-Methyl-4-vinylpiperidin, 1-Vinyl- und 2-Methyl-1-vinyl-imidazol, Dimethylallylamin und Methyldiallylamin sowie para-, meta- und ortho-Aminostyrol, Dimethylaminoethylvinylether, N-Vinylpyrrolidon und 2-Pyrrolidinoethylmethacrylat, Acryl- und Methacrylsäure, Itaconsäure, Zimtsäure, Crotonsäure, Fumarsäure, Maleinsäure und deren Hydroxyniederalkylmono- und -diester, wie 2-Hydroxyethyl- und Di-(2-hydroxy)-ethylfumarat, -maleinat und -itaconat, sowie 3-Hydroxypropyl-butylfumarat und Di-polyalkoxyalkyl-fumarate, -maleinate und -itaconate, Maleinsäureanhydrid, N-Methyl-maleinsäureimid, Natriumacrylat und -methacrylat, 2-Methacryloyloxyethylsulfonsäure, 2-Acrylamido-2-methylpropansulfonsäure, 2-Phosphatoethylmethacrylat, Vinylsulfonsäure, Phenylvinylsulfonat, Natriumvinylsulfonat, p-Styrolsulfonsäure, Natrium-p-styrolsulfonat und Allylsulfonsäure, N-Vinylpyrrolidon, N-Vinylpyridon, N-Vinylcaprolactam, ferner die quaternisierten Derivate kationischer Monomerer, welche man durch Quaternierung mit ausgewählten Alkylierungsmitteln, z.B. halogenierten Kohlenwasserstoffen wie Methyliodid, Benzylchlorid oder Hexadecylchlorid, Epoxiden wie Glycidol, Epichlorhydrin oder Ethylenoxid, Acrylsäure, Dimethylsulfat, Methylsulfat und Propansulton erhält.

Eine vollständigere Liste im Zusammenhang mit dieser Erfindung verwendbarer, wasserlöslicher Monomerer findet sich in: R.H. Yocum und E.B. Nyquist, Functional Monomers [Funktionelle Monomere], Band 1, S. 424-440 (M. Dekker, N.Y. 1973).

Bevorzugte hydrophile Vinylmonomere sind 2-Hydroxyethylmethacrylat, N-Vinyl-2-pyrrolidon, N,N-Dimethylacrylamid sowie Acryl- und Methacrylsäure.

Als hydrophobe Vinylmonomere, die gegebenenfalls erfindungsgemäss verwendet werden, kommen beispielsweise in Betracht:
Acrylate und Methacrylate der Formel III, worin worin W und Y für Wasserstoff stehen, X für Wasserstoff oder Methyl steht und Z eine Gruppe -Z¹-Z³ bedeutet, worin Z¹ für -COO- steht, das über Sauerstoff an Z³ gebunden ist, und Z³ eine lineare oder verzweigte aliphatische, eine cycloaliphatische oder eine aromatische Gruppe mit 1 bis 21 Kohlenstoffatomen ist; wie z.B. ein entsprechend substituierter Alkyl-, Cycloalkyl- oder Phenylrest oder eine Kombination solcher Reste, wie Phenylalkyl oder Alkylcycloalkyl, die Ether- oder Thioetherbindungen, Sulfoxid oder Sulfongruppen oder eine Carbonylgruppe enthalten kann; oder Z³ eine heterocyclische Gruppe ist, die Sauerstoff-, Schwefel- oder Stickstoffatome und 5 oder 6, oder falls sie bicyclisch ist, bis zu 10 Ringatome enthält, oder eine Polypropylenoxid- oder Poly-n-butylenoxid-Gruppe mit 2 bis 50 wiederkehrenden Alkoxyeinheiten, oder Z³ eine Alkylgruppe mit 1-12 Kohlenstoffatomen ist, die Halogenatome enthält, insbesondere Fluoratome, oder Z³ eine Siloxangruppe mit 1 bis 6 Si-Atomen ist;
Acrylamide und Methacrylamide der Formel III, worin W und Y für Wasserstoff stehen, X für Wasserstoff oder Methyl steht und Z monosubstituiertes Aminocarbonyl bedeutet, das durch eine wie vorstehend definierte Gruppe Z³ substituiert ist;
Maleinate und Fumarate der Formel III, worin W und X (oder W und Z) für Wasserstoff stehen, und Y und Z (oder X und Y) unabhängig voneinander eine Gruppe -Z¹-Z³ bedeuten, worin Z¹ und Z³ wie vorstehend definiert sind;
Itaconate der Formel III, worin W und Y für Wasserstoff stehen, X eine Gruppe -Z¹-Z³ bedeutet, worin Z¹ und Z³ wie vorstehend definiert sind und Z eine Gruppe -CH₂-Z¹-Z³ bedeutet, worin Z¹ und Z³ wie vorstehend definiert sind;
Crotonate der Formel III, worin W und X für Wasserstoff stehen, Y für Methyl steht und Z eine Gruppe -Z¹-Z³ bedeutet, worin Z¹ und Z³ wie vorstehend definiert sind;
Vinylester der Formel III, worin W, Y, und X für Wasserstoff stehen und Z eine Gruppe -Z¹-Z³ bedeutet, worin Z¹ für -COO- steht, das über Kohlenstoff an Z³ gebunden ist, und Z³ wie vorstehend definiert ist;
Vinylether der Formel III, worin W, X und Y für Wasserstoff stehen und Z eine Gruppe -Z¹-Z³ bedeutet, worin Z¹ für Sauerstoff steht und Z³ wie vorstehend definiert ist;
Bevorzugt sind insbesondere C₁-C₄-Alkylester oder C₅-C₇-Cycloalkylester von vinylisch ungesättigten Carbonsäuren mit 3 bis 5 Kohlenstoffatomen.

Beispiele geeigneter hydrophober Monomerer sind: Methyl-, Ethyl-, Propyl-, Isopropyl-, Butyl-, Isobutyl-, tert-Butyl-, Ethoxyethyl-, Methoxyethyl-, Benzyl-, Phenyl-, Cyclohexyl-, Trimethylcyclohexyl-, Isobornyl-, Dicyclopentadienyl-, Norbornylmethyl-, Cyclododecyl-, 1,1,3,3-Tetramethylbutyl-, n-Butyl-, n-Octyl-, 2-Ethylhexyl-, Decyl-, Dodecyl-, Tridecyl-, Octadecyl-, Glycidyl-, Ethylthioethyl-, Furfuryl-, Tri-, Tetra- und Pentasiloxanylpropyl-acrylate und -methacrylate, sowie die entsprechenden Amide; 1-(1,1-Dimethyl-3-oxobutyl)-acrylamid; Mono- und Dimethyl-fumarat, -maleat und -itaconat; Diethylfumarat; Isopropyl- und Diisopropyl-fumarat und -itaconat; Mono- und Diphenyl- und Methylphenyl-fumarat und -itaconat; Methyl- und Ethylcrotonat; Methylvinylether und Methoxyethylvinylether, Vinylacetat, Vinylpropionat, Vinylbenzoat, Acrylnitril, Vinylidenchlorid, Styrol, α-Methylstyrol und tert-Butylstyrol.

Bevorzugte hydrophobe Vinylmonomere sind Methylmethacrylat, n-Butylmethacrylat, Isopropylmethacrylat, Isobutylmethacrylat, Cyclohexylmethacrylat oder ein Gemisch davon.

Unter den vorstehend genannten Vinylmonomeren sind drei spezielle Typen von hydrophoben Vinylmonomeren im erfindungsgemässen Zusammenhang besonders erwähnenswert, nämlich Siloxanmonovinylkomponenten, fluorhaltige Vinylverbindungen und Vinylverbindungen mit sperrigem Kohlenwasserstoffrest.

Besonders bevorzugte Siloxanmonovinylkomponenten sind Verbindungen der Formel III, worin W und Y für Wasserstoff stehen, X für Wasserstoff oder Methyl steht und Z eine Gruppe -Z¹-Z⁴ bedeutet, worin Z¹ für -COO- steht, das über Sauerstoff an Z⁴ gebunden ist und worin Z⁴ ein oder mehrfach, z.B. drei- bis neunfach, durch Triniederalkylsilyloxy substituiertes Silyl-niederalkyl ist. Unter Silyl-niederalkyl wird in diesem Zusammenhang ein durch ein oder mehrere Siliciumatome substituierter Niederalkylrest verstanden, dessen freie Valenzen an den Siliciumatomen insbesondere durch Triniederalkylsilyloxy abgesättigt sind. Speziell hervorzuhebende Einzelverbindungen sind beispielsweise Tris(trimethylsiloxy)silylpropylmethacrylat und Tris(tris(trimethylsiloxy)siloxy)silylpropylmethacrylat.

Besonders bevorzugte fluorhaltige Vinylverbindungen sind Verbindungen der Formel III, worin W und Y für Wasserstoff stehen, X für Wasserstoff oder Methyl steht und Z eine Gruppe -Z¹-Z⁵ bedeutet, worin Z¹ für -COO- steht, das über Sauerstoff an Z⁵ gebunden ist und worin Z⁵ durch Fluor substituiertes Alkyl, insbesondere Niederalkyl ist. Spezielle Beispiele hierfür sind 2,2,2-Trifluorethylmethacrylat, 2,2,3,3-Tetrafluorpropylmethacrylat, 2,2,3,3,4,4,5,5-Octafluorpentylmethacrylat und Hexafluorisopropylmethacrylat.

Besonders bevorzugte Vinylverbindungen mit sperrigem Kohlenwasserstoffrest sind Verbindungen der Formel III, worin W und Y für Wasserstoff stehen, X für Wasserstoff oder Methyl steht und Z eine Gruppe -Z¹-Z⁶ bedeutet, worin Z¹ für -COO- steht, das über Sauerstoff an Z⁶ gebunden ist und worin Z⁶ durch Niederalkyl substituiertes Cycloalkyl, durch Niederalkyl substituiertes Cycloalkylniederalkyl, unsubstituiertes oder durch Niederalkyl substituiertes Di- oder Oligocycloalkyl, unsubstituiertes oder durch Niederalkyl substituiertes Di- oder Oligocycloalkyl-niederalkyl oder mindestens eine tert.-Butylgruppe enthaltendes C₅-C₁₀-Alkyl bedeutet welches unsubstituiert oder durch Cycloalkyl substituiert ist.

Durch Niederalkyl substituiertes Cycloalkyl Z⁶ ist z.B. entsprechend substituiertes C₅-C₇-Cycloalkyl , wie Cyclopentyl, Cyclohexyl oder Cycloheptyl, welches jeweils durch ein bis fünf Niederalkylgruppen substituiert ist. Als Substituenten sind C₁-C₄-Alkylgruppen bevorzugt, insbesondere Methyl. Vorzugsweise ist Cycloalkyl Z⁶ zumindest einfach, bevorzugt mehrfach, in der 3-Position durch Niederalkyl substituiert. Herausragend geeignet ist zwei- bis vierfach durch Niederalkyl, z.B. Methyl, substituiertes Cyclohexyl, z.B. 3,5-Dimethylcyclohexyl, 3,3,5-Trimethylcyclohexyl oder 3,3,5,5-Tetramethylcyclohexyl.

Durch Niederalkyl substituiertes Cycloalkylniederalkyl Z⁶ bedeutet Reste wie vorstehend definiert, die über Niederalkyl, insbesondere Methyl, gebunden sind, also z.B. Trimethylcyclohexylmethyl, wie 3,3,5-Trimethylcyclohexylmethyl.

Unter unsubstituiertem oder durch Niederalkyl substituiertem Di- oder Oligocycloalkyl Z⁶ werden unsubstituierte oder durch Niederalkyl substituierte di-, tri- oder tetracyclische Kohlenwasserstoffreste verstanden. Diese Reste haben pro Ring vorzugsweise fünf oder sechs Ringglieder. Die Summe der Ringglieder beläuft sich vorzugsweise auf sieben bis 12 Kohlenstoffatome. Bevorzugte Reste Z⁶ sind beispielsweise Bicyclo[2.2.1]heptyl, Bicyclo[2.2.2]octyl, Tricyclo[5.2.1.0²^{,6}]decyl, Adamantyl, Bornyl oder Isobornyl.

Unsubstituiertes oder durch Niederalkyl substituiertes Di- oder Oligocycloalkylniederalkyl Z⁶ bedeutet Reste wie im vorstehenden Absatz definiert, die über Niederalkyl, insbesondere über Methyl, gebunden sind, also z.B. Tricyclo[5.2.1.0²^{,6}]decylmethyl oder Adamantylmethyl.

Mindestens eine tert.-Butylgruppe enthaltendes C₅-C₁₀-Alkyl, unsubstituiert oder durch Cycloalkyl substituiert, bedeutet insbesondere tert.-Butyl-C₁-C₆-alkyl, wie tert.-Butylmethyl, 2-tert.-Butylethyl oder 2-tert.-Butyl-2-cyclohexylethyl.

Speziell hervorzuhebende Einzelverbindungen sind 3,3,5-Trimethylcyclohexylmethacrylat, Isobornylmethacrylat, Neopentylmethacrylat und Tricyclo[5.2.1.0]decylmethacrylat.

Die Copolymere enthaltend Einheiten der Formel I und Kontaktlinsen daraus enthalten unter Umständen auch oligo-vinylische Comonomere als Vernetzer.

Geeignete Vernetzer sind insbesondere diolefinische Monomere, z.B. Allylacrylat und -methacrylat, Ethylenglykol-, Diethylenglykol-, Triethylenglykol-, Tetraethylenglykol- und allgemein Polyethylenoxidglykoldiacrylate und -dimethacrylate 1,4-Butandiol- und Polyn-butylenoxidglykoldiacrylate und -dimethacrylate, Propylenglykol- und Polypropylenoxidglykoldiacrylate und -dimethacrylate, Thiodiethylenglykoldiacrylat und -dimethacrylat, Di-(2-hydroxyethyl)-sulfondiacrylat und -dimethacrylat, Neopentylglykoldiacrylat und -dimethacrylat, Trimethylolpropan-tri- und -tetraacrylat, Pentaerythrit-tri- und -tetraacrylat, Divinylbenzol, Divinylether, Divinylsulfon, Disiloxanyl-bis-3-hydroxypropyldiacrylat oder-methacrylat und verwandte Verbindungen. Ethylenglykoldimethacrylat ist bevorzugt.

Als Vernetzer kommen auch Oligovinylmacromere, z.B. Divinylmacromere in Frage, wie sie z.B. in der US-A-4,136,250 beschrieben sind. Ferner sind als Vernetzer im erfindungsgemässen Zusammenhang auch Oligovinylsiloxanverbindungen geeignet, z.B. Bis(meth)acryloxy-niederalkyl-siloxane mit bis zu 10 Siliciumatomen. Beispiele hierfür sind 3,5-Bis(3-methacroyloxypropyl)-3,5-bis(trimethylsiloxy)-1,1,1,7,7,7-hexamethyltetrasiloxan und 1,3-Dimethacryloxypropyl-tetramethyldisiloxan.

Die vorstehend genannten Bevorzugungen für Verbindungen der Formel III und auch für Vernetzer gelten analog auch für Copolymere der Formel I und die erfindungsgemässen Kontaktlinsen, die Copolymere der Formel I enthalten.

Auch die Verbindungen der Formel III sind bekannt oder auf an sich bekannte Weise herstellbar.

Ausser den Kontaktlinsen aus einem Copolymer enthaltend Einheiten der Formel I betrifft die vorliegenden Erfindung auch die zugrundeliegenden Copolymere der Formel I, soweit diese noch neu sind. Dies sind die Copolymere der Formel I ausser den 1:1-Copolymeren zwischen Tetracyclo[5.1.0.0^{1,6}.0^{2,7}]octan (Verbindung der Formel II, worin R¹ und R² für Wasserstoff stehen und R³ und R⁴ gemeinsam 1,3-Propylen bedeuten) und Acrylnitril, Tricyclo[1.1.1.0^{1,3}]pentan und Acrylnitril, 2-Pentyl-tricyclo[1.1.1.0^{1,3}]pentan und Acrylnitril, sowie Tricyclo[1.1.1.0^{1,3}]pentan und Maleinsäureanhydrid.

Die Copolymere sind üblicherweise alternierende Copolymere, in denen sich die beiden in Formel I wiedergegebenen Bestandteile ("A" und das Propellan) regelmässig wiederholen, ohne dass diese Bestandteile durch andere Bestandteile voneinander getrennt werden. Mit umfasst sind jedoch auch ternäre oder quaternäre Copolymere, sowie Kontaktlinsen daraus, die beispielsweise aus zwei unterschiedlichen Verbindungen der Formel II und einer Verbindung der Formel III herstellbar sind, oder aus einer Verbindung der Formel II und zwei unterschiedlichen Verbindungen der Formel III herstellbar sind. Derartige Copolymere können wiederum alternierende Strukturen aufweisen, z.B. alternierende Blöcke aus Propellan und erstem Comonomer sowie aus Propellan und zweitem Comonomer oder auch aus erstem und zweiten Comonomer, oder davon abweichende Strukturen, wie z.B. unregelmässige Strukturen oder Dreiersequenzen aus Propellan, erstem und zweiten Comonomer

Die Herstellung der erfindungsgemässen Copolymere erfolgt auf an sich bekannte Weise. So können die Monomere der Formel II und III bei Raumtemperatur in Gegenwart eines geeigneten Lösungsmittels copolymerisiert werden. Ein geeignetes Lösungsmittel ist beispielsweise ein Kohlenwasserstoff, wie Hexan, Benzol, oder Toluol, oder ein Ether, wie Diethylether oder Tetrahydrofuran. Nach Abziehen des Lösungsmittels erhält man so beispielsweise eine Folie, die zu einer Kontaktlinse umgeformt werden kann. Die Polymerisation kann auch auf eine der nachstehend beschriebenen Weisen beschleunigt werden.

Die erfindungsgemässen Polymere werden z.B. durch Photopolymerisation, thermische Polymerisation oder durch Radikalcopolymerisation, entweder in der Masse oder in Gegenwart geringer Mengen Lösungsmittel, erzeugt. Die Polymerisation wird zweckmässig in der Wärme durchgeführt, vorzugsweise in Gegenwart eines freie Radikale bildenden Initiators, beispielsweise bei einer Temperatur im Bereich von etwa 30°C bis etwa 105°C. Diese Initiatoren sind vorzugsweise Peroxide oder Azokatalysatoren mit einer Halbwertszeit von mindestens 20 Minuten bei der Polymerisationstemperatur. Typische Beispiele für verwendbare Peroxyverbindungen sind Isopropylpercarbonat, tert.-Butylperoctoat, Benzoylperoxid, Lauroylperoxid, Decanoylperoxid, Acetylperoxid, Bernsteinsäureperoxid, Methylethylketonperoxid, tert.-Butylperoxyacetat, Propionylperoxid, 2,4-Dichlorbenzoylperoxid, tert.-Butylperoxypivalat, Pelargonylperoxid, 2,5-Dimethyl-2,5-bis-(2-ethylhexanoylperoxy)-hexan, p-Chlorbenzoylperoxid, tert.-Butylperoxybutyrat, tert.-Butylperoxymaleinsäure, tert.-Butylperoxyisopropylcarbonat und Bis-(1-hydroxycyclohexyl)-peroxid.

Zu Azoverbindungen gehören 2,2′-Azo-bis-isobutyronitril, 2,2′-Azo-bis-(2,4-dimethylvaleronitril), 1,1′-Azo-bis-(cyclohexancarbonitril) und 2,2′-Azo-bis-(2,4-dimethyl-4-methoxyvaleronitril).

Geeignete Initiatoren sind ferner Photoinitiatoren, Benzoinether, Darocure-Typen (Merck) oder Irgacure-Typen (Ciba-Geigy).

Man kann dabei auch andere, freie Radikale bildende Mechanismen anwenden wie Strahlung mit z.B. Röntgenstrahlen, Elektronenstrahlen und UV-Strahlung.

Die Initiatormenge kann zwischen 0,01 und 1,5 Gew.%, bezogen auf die Bestandteile der Formel II und III, schwanken, liegt aber vorzugsweise bei 0,01 bis 0,5 Gew.%.

Die Polymerisationsgemische können auf an sich bekannte Weise, beispielsweise in Zylinderform, polymerisiert werden, beispielsweise indem man sie in geschlossenen zylindrischen Formen (Rohren) einem Temperaturprogramm unterwirft, bei dem die Temperatur von 30°C stufenweise bis etwa 100°C erhöht wird. Die Temperaturstufen können z.B. zwischen 5 und 10°C betragen, mit einer Verweildauer von 1 bis 12 Stunden pro Temperatur. Üblich sind zwei- oder fünfstündige Intervalle, es können einzelne Temperaturen jedoch auch bis zu 20 Stunden gehalten werden. Üblicherweise wird am Ende 1 bis 15 Stunden bei Temperaturen zwischen 80 und 130°C getempert.

Auch die Herstellung von erfindungsgemässen Kontaktlinsen kann auf an sich bekannte Weise erfolgen. Dazu werden z.B. die Verbindungen der Formel II und III in zylindrischer Form polymerisiert, und die erhältlichen Stäbe nach Entformung in Scheiben oder Knöpfe zerteilt, die weiter mechanisch bearbeitet werden können, insbesondere durch Drehverfahren. Darüberhinaus können die erfindungsgemässen linsen auch nach anderen an sich bekannten Verfahren wie Giessen in statischen Formen, Rotationsgiessen, Verpressen, Tiefziehen, Warmformen, Drehen oder Laserbearbeitung hergestellt werden. Diese Verfahrensschritte sind an sich bekannt und bedürfen daher für den Fachmann keiner detaillierten Erläuterung.

Die Herstellung erfolgt vorzugsweise unter einer inerten Atmosphäre, wenn sie in offenen Formen durchgeführt wird. Bekanntlich hemmt Sauerstoff die Polymerisation und führt zu verlängerten Polymerisationszeiten. Werden geschlossene Formen zur Bildung des Polymerisats verwendet, so bestehen die Formen vorteilhafterweise aus inerten Materialien mit niedriger Sauerstoffdurchlässigkeit und mit nicht-klebenden Eigenschaften. Beispiele für geeignete Formmaterialien sind Polytetrafluorethylen, wie Teflon®, Silikonkautschuk, Polyethylen, Polypropylen und Polyester wie Mylar®. Bei Einsatz eines geeigneten Entformungsmittels sind auch Formen aus Glas und Metall verwendbar.

Giessen in statischen Formen kann beispielsweise, wenn Formen mit Innenkurve und Aussenkurve verwendet werden, unmittelbar zu Kontaktlinsen führen. So können Kontaktlinsen durch Polymerisation der Verbindungen der Formel II und III in geeigneten Formen direkt ("full mold"-Verfahren) oder mit nur einer fertigen Fläche ("semi mold"-Verfahren) hergestellt werden.

Rotationsgiessen (spin casting) lässt sich erfindungsgemäss ebenfalls anwenden, indem eine Lösung der Verbindungen der Formel II und III in eine Form für Rotationsguss eingebracht wird, worauf die Form in Rotation versetzt wird. Dabei verdampft das Lösungsmittel. Die fertige Kontaktlinse, deren Abmessungen sich durch die Abmessungen der Form, die Rotationsgeschwindigkeit und die Viskosität der eingebrachten Lösung steuern lassen, bleibt in der Form zurück

Verpressen geschieht erfindungsgemäss z.B. durch Formpressen einer Folie aus dem erfindungsgemässen Copolymer. Eine Folie aus dem Copolymer kann auf an sich bekannte Weise beispielsweise durch Giessen einer Lösung der Verbindungen der Formel II und III hergestellt werden.

Aus einer z.B. wie vorstehend erwähnt hergestellten Folie kann eine Kontaktlinse auch auf an sich bekannte Weise durch Tiefziehen oder Warmformen hergestellt werden.

Drehen bietet sich als letzter Verfahrensschritt zur Herstellung von erfindungsgemässen Kontaktlinsen ebenfalls an. Dies gilt immer dann, wenn ein z.B. nach einem der vorstehend genannten Verfahren erhältlicher Rohling noch weiterer Bearbeitung bedarf. Unter Drehen wird das an sich bekannte spanabhebende Bearbeitungsverfahren von Kontaktlinsen-Rohlingen verstanden. Entsprechende Rohlinge lassen sich z.B. durch Extrusion von Rundstäben und deren Zerteilen oder Giessen aus einer Lösung herstellen. Unter den Begriff Kontaktlinsen-Rohling fallen in diesem Zusammenhang Knöpfe (buttons) oder semi-mold-Produkte, wie z.B. Innenkurvenrohlinge. Typische Rohlinge weisen Dicken von 4 oder 6 mm und Durchmesser von 10 bis 17, z.B. 12 oder 14 mm auf.

Auch die Laserbearbeitung lässt sich erfindungsgemäss anwenden, wobei man von Rohlingen oder nach einem der anderen Verfahren hergestellten Kontaktlinsen ausgeht, sofern letztere noch einer zusätzlichen Feinbearbeitung ihrer Oberfläche bedürfen.

Die nachfolgenden Beispiele erläutern den Gegenstand der Erfindung, ohne ihn jedoch, etwa auf den Umfang der Beispiele, zu beschränken. Prozente bei Mengenangaben sind Gewichtsprozente soweit nicht ausdrücklich anders angegeben. Temperaturen werden in Grad Celsius angegeben.

Beispiel 1: 100 mmol Tricyclo[1.1.1.0¹^{,3}]pentan werden mit 150 mmol N-Methylmaleinsäureimid in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 75 % Ausbeute wird ein alternierendes Copolymer in Form einer Folie erhalten, Zersetzungstemperatur >250°C.

Beispiel 2: 100 mmol Tricyclo[1.1.1.0¹^{,3}]pentan werden mit 150 mmol Methylacrylat in einer 30 %igen Benzollösung zwei Tage bei Raumtemperatur unter Ausschluss von Sauerstoff copolymerisiert. Man giesst die viskose Lösung auf eine Glasplatte und lässt das Lösungsmittel verdampfen. In 99 % Ausbeute wird ein alternierendes Copolymer in Form einer Folie erhalten, Glastemperatur 53°C.

Beispiel 3: 100 mmol Tricyclo[1.1.1.0^{1,3}]pentan werden mit 150 mmol Methylmethacrylat in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 56 % Ausbeute wird ein alternierendes Copolymer in Form einer Folie erhalten, Glastemperatur 115°C.

Beispiel 4: 100 mmol Tricyclo[1.1.1.0¹^{,3}]pentan werden mit 150 mmol Phenyl-vinylsulfonat in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 15 % Ausbeute wird ein alternierendes Copolymer in Form einer Folie erhalten, Glastemperatur 60°C.

Beispiel 5: 100 mmol Tricyclo[1.1.1.0¹^{,3}]pentan werden mit 150 mmol Styrol in einer 30 %igen Benzollösung zwei Tage bei Raumtemperatur unter Ausschluss von Sauerstoff copolymerisiert. Man giesst die viskose Lösung auf eine Glasplatte und lässt das Lösungsmittel verdampfen. In 15 % Ausbeute wird ein Copolymer in Form einer Folie erhalten, Glastemperatur 161 °C.

Beispiel 6: 100 mmol 2-Pentyl-tricyclo[1.1.1.0¹^{,3}]pentan werden mit 150 mmol Maleinsäuredimethylester in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 32 % Ausbeute wird ein alternierendes Copolymer in Form einer Folie erhalten, Zersetzungstemperatur >250°C.

Beispiel 7: 100 mmol 2-Pentyl-tricyclo[1.1.1.0¹^{,3}]pentan werden mit 150 mmol Phenyl-vinylsulfonat in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 20 % Ausbeute wird ein alternierendes Copolymer in Form einer Folie erhalten, Glastemperatur 21 °C

Beispiel 8: 100 mmol 2-Pentyl-tricyclo[1.1.1.0¹^{,3}]pentan werden mit 150 mmol Vinylidenchlorid in Diethylether zwei Tage bei Raumtemperatur unter Ausschluss von Sauerstoff copolymerisiert. Man giesst die viskose Lösung auf eine Glasplatte und lässt das Lösungsmittel verdampfen. In 35 % Ausbeute wird ein Copolymer in Form einer Folie erhalten, Glastemperatur ca. 10°C.

Beispiel 9: 100 mmol Tricyclo[1.1.1.0¹^{,3}]pentan werden mit 150 mmol Ethylacrylat wie vorstehend beschrieben copolymerisiert. Man erhält eine Folie mit einer Glastemperatur von 100°C. Durch Verpressen wird daraus eine Kontaktlinse erhalten, die einen Dk-Wert von 7 aufweist (Dk/L: 9).

Beispiel 10: 100 mmol Tricyclo[1.1.1.0¹^{,3}]pentan werden mit 150 mmol Trifluorethylmethacrylat wie vorstehend beschrieben copolymerisiert. Man erhält eine Folie mit einer Glastemperatur von 40°C. Durch Verpressen wird daraus eine Kontaktlinse erhalten, die einen Dk-Wert von 10 aufweist (Dk/L: 25).

Beispiel 11: 100 mmol Tricyclo[1.1.1.0¹^{,3}]pentan werden mit 150 mmol Tris(trimethylsiloxy)silylpropylmethacrylat wie vorstehend beschrieben copolymerisiert. Man erhält eine Folie mit einer Glastemperatur von 16°C. Durch Verpressen wird daraus eine Kontaktlinse erhalten, die einen Dk-Wert von 135 aufweist (Dk/L: 150). Zum Vergleich werden hier auch die Werte für Polymethacrylacrylat angegeben: Glastemperatur 120°C, Dk-Wert < 1, Transmissibilität Dk/L ebenfalls < 1.

## Patentansprüche

1. Kontaktlinse aus einem Copolymer enthaltend Einheiten der Formel I, 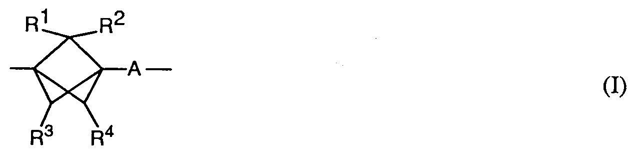 worin R¹ und R² unabhängig voneinander für Wasserstoff, Alkyl, Alkoxyalkyl, Organosilylalkyl oder Organosilyl stehen, R³ und R⁴ jeweils für Wasserstoff stehen oder gemeinsam einen zweiwertigen Alkylenrest mit bis zu 8 Kohlenstoffatomen bedeuten,
und A für einen bivalenten substitutierten 1,2-Ethylenrest steht, der sich von einem copolymerisierbaren Vinylmonomer dadurch ableitet, dass die Vinyl-Doppelbindung durch eine Einfachbindung ersetzt ist.

2. Kontaktlinse gemäss Anspruch 1, dadurch gekennzeichnet, dass R¹ und R² unabhängig voneinander für Wasserstoff, Niederalkyl oder Niederalkoxyniederalkyl stehen und R³ und R⁴ jeweils für Wasserstoff stehen oder gemeinsam einen zweiwertigen Niederalkylenrest bedeuten.

3. Kontaktlinse gemäss Anspruch 1, dadurch gekennzeichnet, dass R¹ für Wasserstoff steht, R² für Wasserstoff oder Niederalkyl steht und R³ und R⁴ jeweils für Wasserstoff stehen oder gemeinsam einen zweiwertigen Niederalkylenrest bedeuten, der die beiden Atome, an die R³ und R⁴ gebunden sind, durch 3 oder 4 Kohlenstoffatome voneinander trennt.

4. Kontaktlinse gemäss Anspruch 1, dadurch gekennzeichnet, dass das Copolymer enthaltend Einheiten der Formel I ein alternierendes Copolymer ist.

5. Kontaktlinse gemäss Anspruch 1, dadurch gekennzeichnet, dass der Bestandteil der Formel I, der mit dem Buchstaben A bezeichnet ist, die Teilformel IV aufweist, 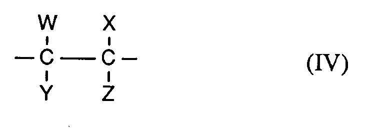 worin die Substituenten W, X, Y und Z die folgenden Bedeutungen haben: drei dieser Substituenten bedeuten Wasserstoff und der vierte Substituent ist ausgewählt unter Acyl, Halogen, einem heterocyclischen Rest oder Aryl, oder zwei dieser Substituenten bedeuten Wasserstoff, der dritte bedeutet Niederalkyl, und der vierte Substituent ist ausgewählt unter Acyl, Halogen, einem heterocyclischen Rest oder Aryl, oder zwei dieser Substituenten bedeuten Wasserstoff und die beiden anderen Substituenten bilden gemeinsam eine Kohlenwasserstoffbrücke, die ununterbrochen oder durch ein oder zwei Heteroatome unterbrochen ist, oder die beiden anderen Substituenten bedeuten unabhängig voneinander Acyl.

6. Kontaktlinse gemäss Anspruch 1, dadurch gekennzeichnet, dass sie aus einem Copolymer hergestellt ist, das erhältlich ist aus einer Verbindung der Formel II, 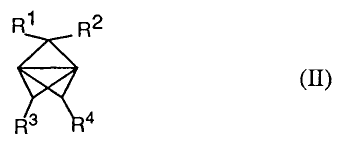 worin R¹, R², R³ und R⁴ die in Anspruch 1 für Formel I angegebene Bedeutung aufweisen und einer Verbindung der Formel III, 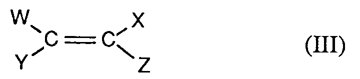 worin die Substituenten W, X, Y und Z die in Anspruch 5 für Formel IV angegebenen Bedeutungen aufweisen.

7. Kontaktlinse gemäss Anspruch 6, dadurch gekennzeichnet, dass es sich bei den Verbindungen der Formel III um eine Verbindung handelt, die ausgewählt ist unter den folgenden Verbindungen: Acrylate und Methacrylate der Formel III, worin W und Y für Wasserstoff stehen, X für Wasserstoff oder Methyl steht und Z eine Gruppe -Z¹-Z² bedeutet, worin Z¹ für -COO- steht, das über Sauerstoff an Z² gebunden ist, und Z² einen durch eine wasserlöslich machende Gruppe wie Carboxy, Hydroxy oder tert.-Amino, z.B. tert. Niederalkylamino mit 1 bis 7 Kohlenstoffatomen je Niederalkylgruppe, eine Polyethylenoxidgruppe mit 2-100 sich wiederholenden Einheiten, bevorzugt mit 2-40 sich wiederholenden Einheiten, oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, wie z.B. einen entsprechend substituierten Alkyl-, Cycloalkyl- oder Phenylrest oder eine Kombination solcher Reste, wie Phenylalkyl oder Alkylcycloalkyl;
ferner Acrylamide und Methacrylamide der Formel III, worin W und Y für Wasserstoff stehen, X für Wasserstoff oder Methyl steht und Z Aminocarbonyl oder Diniederalkylaminocarbonyl bedeutet;
Acrylamide und Methacrylamide der Formel III, worin W und Y für Wasserstoff stehen, X für Wasserstoff oder Methyl steht und Z monosubstituiertes Aminocarbonyl bedeutet, das durch eine wie vorstehend definierte Gruppe Z² oder Niederalkyl substituiert ist;
Maleinate und Fumarate der Formel III, worin W und X (oder W und Z) für Wasserstoff stehen, und Y und Z (oder X und Y) unabhängig voneinander eine Gruppe -Z¹ -Z² bedeuten, worin Z¹ und Z² wie vorstehend definiert sind;
Crotonate der Formel III, worin W und X für Wasserstoff stehen, Y für Methyl steht und Z eine Gruppe -Z¹-Z² bedeutet, worin Z¹ und Z² wie vorstehend definiert sind;
Vinylether der Formel III, worin W, X und Y für Wasserstoff stehen und Z eine Gruppe -Z¹-Z² bedeutet, worin Z¹ für Sauerstoff steht und Z² wie vorstehend definiert ist;
Vinyl-substituierte fünf- oder sechsgliedrige Heterocyclen mit ein oder zwei Stickstoffatomen sowie N-Vinyllactame, wie N-Vinyl-2-pyrrolidon, der Formel III, worin W, X und Y für Wasserstoff stehen und Z einen fünf- oder sechsgliedrigen heterocyclischen Rest mit ein oder zwei Stickstoffatomen bedeutet, sowie den über Stickstoff gebundenen Rest eines Lactams, z.B. denjenigen von 2-Pyrrolidon;
und vinylisch ungesättigte Carbonsäuren der Formel III mit insgesamt 3 bis 10 Kohlenstoffatomen, wie Methacrylsäure, Crotonsäure, Fumarsäure oder Zimtsäure; oder
Acrylate und Methacrylate der Formel III, worin worin W und Y für Wasserstoff stehen, X für Wasserstoff oder Methyl steht und Z eine Gruppe -Z¹ -Z³ bedeutet, worin Z¹ für -COO- steht, das über Sauerstoff an Z³ gebunden ist, und Z³ eine lineare oder verzweigte aliphatische, eine cycloaliphatische oder eine aromatische Gruppe mit 1 bis 21 Kohlenstoffatomen ist, wie z.B. ein entsprechend substituierter Alkyl-, Cycloalkyl- oder Phenylrest oder eine Kombination solcher Reste, wie Phenylalkyl oder Alkylcycloalkyl, die Ether- oder Thioetherbindungen, Sulfoxid oder Sulfongruppen oder eine Carbonylgruppe enthalten kann; oder Z³ eine heterocyclische Gruppe ist, die Sauerstoff-, Schwefel- oder Stickstoffatome und 5 oder 6, oder falls sie bicyclisch ist, bis zu 10 Ringatome enthält, oder eine Polypropylenoxid- oder Poly-n-butylenoxid-Gruppe mit 2 bis 50 wiederkehrenden Alkoxyeinheiten, oder Z³ eine Alkylgruppe mit 1-12 Kohlenstoffatomen ist, die Halogenatome enthält, insbesondere Fluoratome, oder Z³ eine Siloxangruppe mit 1 bis 6 Si-Atomen ist;
Acrylamide und Methacrylamide der Formel III, worin W und Y für Wasserstoff stehen, X für Wasserstoff oder Methyl steht und Z monosubstituiertes Aminocarbonyl bedeutet, das durch eine wie vorstehend definierte Gruppe Z³ substituiert ist;
Maleinate und Fumarate der Formel III, worin W und X (oder W und Z) für Wasserstoff stehen, und Y und Z (oder X und Y) unabhängig voneinander eine Gruppe -Z¹ -Z³ bedeuten, worin Z¹ und Z³ wie vorstehend definiert sind;
Itaconate der Formel III, worin W und Y für Wasserstoff stehen, X eine Gruppe -Z¹-Z³ bedeutet, worin Z¹ und Z³ wie vorstehend definiert sind und Z eine Gruppe -CH₂-Z¹-Z³ bedeutet, worin Z¹ und Z³ wie vorstehend definiert sind;
Crotonate der Formel III, worin W und X für Wasserstoff stehen, Y für Methyl steht und Z eine Gruppe -Z¹-Z³ bedeutet, worin Z¹ und Z³ wie vorstehend definiert sind;
Vinylester der Formel III, worin W, Y, und X für Wasserstoff stehen und Z eine Gruppe -Z¹-Z³ bedeutet, worin Z¹ für -COO- steht, das über Kohlenstoff an Z³ gebunden ist, und Z³ wie vorstehend definiert ist;
Vinylether der Formel III, worin W, X und Y für Wasserstoff stehen und Z eine Gruppe -Z¹-Z³ bedeutet, worin Z¹ für Sauerstoff steht und Z³ wie vorstehend definiert ist.

8. Kontaktlinse gemäss Anspruch 6, dadurch gekennzeichnet, dass es sich bei den Verbindungen der Formel III um eine Verbindung handelt, die ausgewählt ist unter den folgenden Verbindungen: Siloxanmonovinylkomponenten, fluorhaltige Vinylverbindungen und Vinylverbindungen mit sperrigem Kohlenwasserstoffrest.

9. Copolymer enthaltend Einheiten der Formel I, 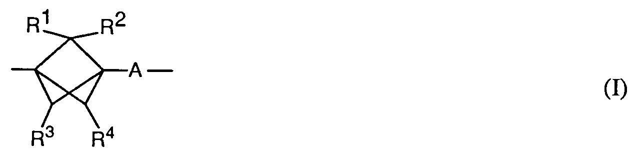 worin R¹ und R² unabhängig voneinander für Wasserstoff, Alkyl, Alkoxyalkyl, Organosilylalkyl oder Organosilyl stehen, R³ und R⁴ jeweils für Wasserstoff stehen oder gemeinsam einen zweiwertigen Alkylenrest mit bis zu 8 Kohlenstoffatomen bedeuten,
und A für einen bivalenten substitutierten 1,2-Ethylenrest steht, der sich von einem copolymerisierbaren Vinylmonomer dadurch ableitet, dass die Vinyl-Doppelbindung durch eine Einfachbindung ersetzt ist,
mit Ausnahme der 1:1-Copolymere zwischen Tetracyclo[5.1.0.0¹^{,6}.0²^{,7}]octan (Verbindung der Formel II, worin R¹ und R² für Wasserstoff stehen und R³ und R⁴ gemeinsam 1,3-Propylen bedeuten) und Acrylnitril, Tricyclo[1.1.1.0¹^{,3}]pentan und Acrylnitril, 2-Pentyl-tricyclo[1.1.1.0¹^{,3}]pentan und Acrylnitril, sowie Tricyclo[1.1.1.0¹^{,3}]pentan und Maleinsäureanhydrid.

10. Verwendung eines Copolymeren gemäss Anspruch 9 zur Herstellung von Kontaktlinsen.

11. Verfahren zur Herstellung von Kontaktlinsen aus einem Copolymeren gemäss Anspruch 9 auf an sich bekannte Weise.
